# EUROPEAN PATENT APPLICATION

(11) **EP 4 693 173 A1**
(43) Date of publication of application: **11.02.2026**
(21) Application number: 23930220.1
(22) Date of filing: 24.03.2023
(51) Int. Cl.: G06T 7/00, G06V 40/16

(54) **INFORMATION PROCESSING SYSTEM, INFORMATION PROCESSING METHOD, AND RECORDING MEDIUM**

(71) Applicant: NEC Corporation, 108-8001 Tokyo (JP)
(72) Inventor: SUGA, Akito, Tokyo 108-8001 (JP); SATO, Kensaku, Tokyo 108-8001 (JP); KITADA, Masato, Tokyo 108-8001 (JP); HAMADA, Hirokazu, Tokyo 108-8001 (JP); MIYAGI, Kazushi, Tokyo 108-8001 (JP)
(74) Representative: Betten & Resch
(86) International application number: PCT/JP2023/011873
(87) International publication number: WO 2024/201579

(57) **Abstract**

An information processing system comprising: an image acquisition means for acquiring at least one of a first image including at least a part of a first lane, in which a first authentication target passes from a first area to a second area, and a second image including at least a part of a second lane, in which a second authentication target passes from the second area to the first area; and an authentication means for performing at least one of authentication of the first authentication target using the first image and authentication of the second authentication target using the second image.

## Description

### Technical Field

The present disclosure relates to technical fields of an information processing apparatus, an information processing method, and a recording medium.

### Background Art

As this type of system, a technology has been proposed for a bicycle parking lot with separate entrance and exit passages, in which a gate-less bicycle parking lot management system is realized by using radio tags (see Patent Literature 1). Other prior art documents related to this disclosure include Patent Literatures 2 to 4.

### Citation List

### Patent Literature

Patent Literature 1: JP2013-020598A
Patent Literature 1: JP2021-095287A
Patent Literature 1: JP2022-053683A
Patent Literature 1: JP2022-164310A

### Summary

### Technical Problem

It is an example object of the present disclosure to provide an information processing apparatus, an information processing method, and a recording medium that aim to improve the techniques/technologies disclosed in Citation List.

### Solution to Problem

An information processing system according to an example aspect comprises: an image acquisition means for acquiring at least one of a first image including at least a part of a first lane, in which a first authentication target passes from a first area to a second area, and a second image including at least a part of a second lane, in which a second authentication target passes from the second area to the first area; and an authentication means for performing at least one of authentication of the first authentication target using the first image and authentication of the second authentication target using the second image.

An information processing method according to an example aspect including: acquiring at least one of a first image including at least a part of a first lane, in which a first authentication target passes from a first area to a second area, and a second image including at least a part of a second lane, in which a second authentication target passes from the second area to the first area; and performing at least one of authentication of the first authentication target using the first image and authentication of the second authentication target using the second image.

An recording medium according to an example aspect is a recording medium on which a computer program that allows a computer to execute an information processing method is recorded, the information processing method including: acquiring at least one of a first image including at least a part of a first lane, in which a first authentication target passes from a first area to a second area, and a second image including at least a part of a second lane, in which a second authentication target passes from the second area to the first area; and performing at least one of authentication of the first authentication target using the first image and authentication of the second authentication target using the second image.

### Brief Description of Drawings

[FIG. 1] FIG. 1 is a diagram showing configuration of an information processing system according to a first embodiment.
[FIG. 2] FIG. 2 is a diagram showing an example of an authentication area.
[FIG. 3] FIG. 3 is a flowchart showing operation of an information processing apparatus according to the first embodiment.
[FIG. 4] FIG. 4 is a diagram showing an example of a gradient road.
[FIG. 5] FIG. 5 is a diagram showing another example of a gradient road.
[FIG. 6] FIG. 6 is a diagram showing another example of a gradient road.
[FIG. 7] FIG. 7 is a diagram showing configuration of an information processing apparatus according to a second embodiment.
[FIG. 8] FIG. 8 is a block diagram showing configuration of a ticket gate system according to a second embodiment.
[FIG. 9] FIG. 9 is a diagram for explaining a target tracking process.
[FIG. 10] FIG. 10 is a diagram showing an example of an ID correspondence table.
[FIG. 11] FIG. 11 is a diagram showing another example of an authentication area.
[FIG. 12] FIG. 12 is a diagram showing another example of an authentication area.

### Description of Example Embodiments

### <First Example Embodiment>

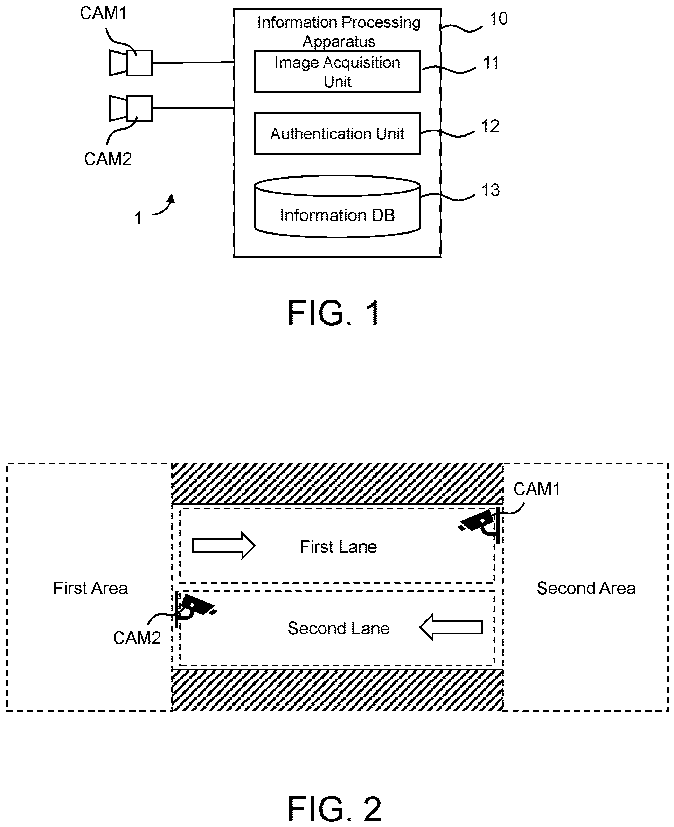

An information processing system, an information processing method, and a recording medium according to a first example embodiment will be described with reference to FIG. 1 to FIG. 3. The following describes the information processing system, the information processing method, and the recording medium according to the first example embodiment, by using an information processing system 1.

In FIG. 1, the information processing system 1 is provided with an information processing apparatus 10 and cameras CAM 1 and CAM 2. Cameras CAM 1 and CAM 2 will be described with reference to FIG. 2. In FIG. 2, a space (e.g., a passageway) connecting a first area and a second area is provided between the first area and the second area.

Incidentally, the first area may be, for example, one of interior and exterior areas of a railway station. In this case, the second area may be the other of the interior and the exterior areas of the railway station. The first area may be, for example, one of interior and exterior areas of an amusement park. In this case, the second area may be the other of the interior and the exterior areas of the amusement park. The first area may be an area set to a first security level. In this case, the second area may be an area set to a second security level different from the first security level.

The above space has a first lane through which targets moving from the first area to the second area pass, and a second lane through which targets moving from the second area to the first area pass. Wherein a member, such as a fence, may be provided between the first lane and the second lane to physically prevent the passage of targets. Incidentally, the term "target" is not limited to humans, but includes animals such as dogs and snakes, and moving objects such as robots.

The camera CAM1 images at least a part of the first lane. As a result, the camera CAM1 generates a first image including at least the part of the first lane. The camera CAM2 images at least a part of the second lane. As a result, the camera CAM2 generates a second image including at least the part of the second lane. Incidentally, the information processing system 1 may include other cameras that image at least a part of the first lane in addition to the camera CAM1. The information processing system 1 may also include other cameras that image at least a part of the second lane in addition to the camera CAM2. In other words, the information processing system 1 may include three or more cameras.

Incidentally, the first lane and the second lane do not need to be located in the same space (e.g., a passageway). For example, the first lane may be provided in a first space connecting the first area and the second area, and the second lane may be provided in a second space different from the first space, connecting the first area and the second area. Incidentally, a third lane may be provided in addition to the first lane and the second lane. In other words, three or more lanes may be provided. Wherein the third lane may be provided in a space connecting the third area, which is different from the first area and the second area, or in a space connecting the second area and the fourth area, which is different from the first area.

Returning to FIG. 1, the information processing apparatus 10 has an image acquisition unit 11, an authentication unit 12, and an information database 13 (hereinafter referred to as "information DB 13" as appropriate). The information DB 13 stores information related to registrants who are registered as users of the information processing system 1. The information related to registrants includes information (e.g., feature quantities) used in biometric authentication described later.

The image acquisition unit 11 of the information processing apparatus 10 acquires the first image and the second image. The authentication unit 12 performs biometric authentication of a target (in other words, an authenticated target) moving from the first area to the second area using the first image. The authentication unit 12 performs biometric authentication of a target (in other words, an authenticated target) moving from the second area to the first area using the second image. Incidentally, the biometric authentication may be at least one of face recognition and iris recognition.

For example, the authentication unit 12 may detect the face of the target included in the first image (in other words, the face captured in the first image). The authentication unit 12 may calculate face feature quantities indicating the features of the detected face. The authentication unit 12 may calculate a matching score from the calculated face feature quantity and the face feature quantity registered in the information DB 13 (corresponding to the "information used for biometric authentication" described above). The authentication unit 12 may determine (identify) whether or not the target included in the first image is a registered person by comparing the matching score with a predetermined threshold value.

For example, the authentication unit 12 may detect the face of the target included in the second image (in other words, the face captured in the second image). The authentication unit 12 may calculate facial feature quantities indicating the features of the detected face. The authentication unit 12 may calculate a matching score from the calculated facial feature quantities and the facial feature quantities registered in the information DB 13. The authentication unit 12 may determine (identify) whether or not the target included in the second image is a registered person by comparing the matching score with a predetermined threshold value.

For example, the authentication unit 12 may detect the eyes of the target included in the first image (in other words, the eyes captured in the first image). The authentication unit 12 may calculate iris feature quantities indicating the iris features of the detected eyes. The authentication unit 12 may calculate a matching score from the calculated iris feature quantity and the iris feature quantity registered in the information DB 13 (corresponding to the "information used for biometric authentication" described above). The authentication unit 12 may determine (identify) whether or not the target included in the first image is the registered person by comparing the matching score with a predetermined threshold value. The authentication unit 12 may determine (identify) whether the target is the registered person by using both the face feature quantity indicating the face feature of one target included in the first image and the iris feature quantity indicating the iris feature of the eye of the one target. In other words, the authentication unit 12 may perform multimodal authentication.

For example, the authentication unit 12 may detect the eyes of the target included in the second image (in other words, the eyes captured in the second image). The authentication unit 12 may calculate iris feature quantities indicating the iris features of the detected eyes. The authentication unit 12 may calculate a matching score from the calculated iris feature quantities and the iris feature quantities registered in the information DB 13. The authentication unit 12 may determine (identify) whether or not the target included in the second image is a registered person by comparing the matching score with a predetermined threshold value. The authentication unit 12 may determine (identify) whether or not the target is a registered person by using both a face feature quantity indicating a feature of the face of a target included in the second image and an iris feature quantity indicating a feature of the iris of the target. In other words, the authentication unit 12 may perform multimodal authentication.

The authentication unit 12 may perform biometric authentication while a target (in other words, an authenticated target), who moves from the first area to the second area in the first lane, is passing through the first lane. Similarly, the authentication unit 12 may perform biometric authentication while a target (in other words, the authenticated target), who moves from the second area to the first area in the second lane, is passing through the second lane. In other words, the authentication unit 12 may perform walk-through biometric authentication. For this reason, the first lane and the second lane may be referred to as the authentication area. Incidentally, the length of the first lane in the direction of travel of the target passing through the first lane may be set so that the time required for the target to pass through the first lane is sufficiently longer than the time required for biometric authentication. Similarly, the length of the second lane in the direction of travel of the target passing through the second lane may be set so that the time required for the target to pass through the second lane is sufficiently longer than the time required for biometric authentication.

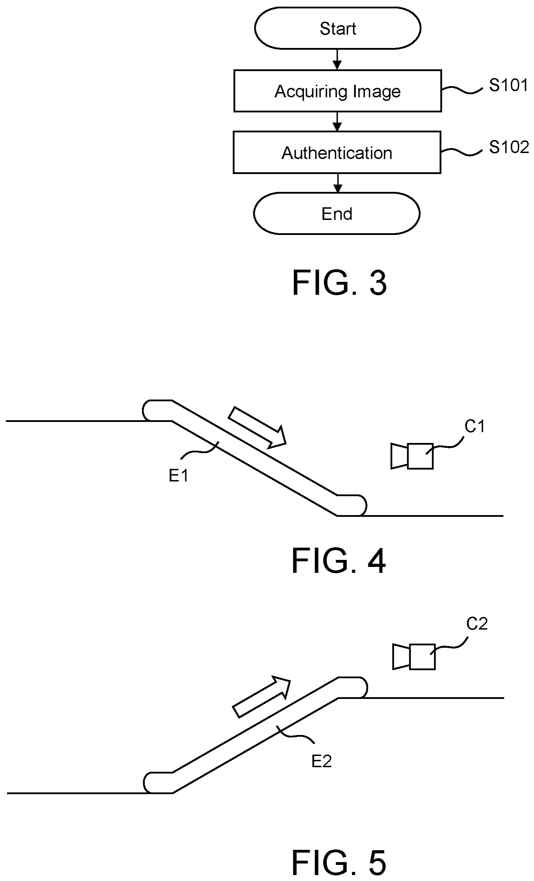

The operation of the information processing apparatus 10 will be described with reference to the flowchart in FIG. 3. In FIG. 3, the image acquisition unit 11 acquires the first image and the second image (step S101). The authentication unit 12 performs biometric authentication using the first image and biometric authentication using the second image (step S102).

Incidentally, the information processing system 1 may be provided with one of the cameras CAM 1 and CAM 2 and the information processing apparatus 10. In other words, the information processing system 1 may perform biometric authentication only for a target passing through one of the first lane and the second lane. In other words, the image acquisition unit 11 may acquire only one of the first image and the second image. The authentication unit 12 may perform only one of biometric authentication using the first image and biometric authentication using the second image. In this case, biometric authentication of the target passing through the other of the first lane and the second lane may be performed by another information processing system not shown.

Therefore, the image acquisition unit 11 may acquire at least one of the first image and the second image. The authentication unit 12 may perform at least one of biometric authentication using the first image and biometric authentication using the second image.

In the information processing system 1, it can be said that an information processing method is performed, wherein the information processing method includes: acquiring a first image including at least a part of a first lane, in which a first authentication target passes from a first area to a second area, and a second image including at least a part of a second lane, in which a second authentication target passes from the second area to the first area, and performing at least one of authentication of the first authentication target using the first image and authentication of the second authentication target using the second image.

The above-mentioned information processing apparatus 10 may be recognized by a computer reading a computer program recorded on a recording medium. In this case, it can be said that the recording medium records a computer program that allows a computer to execute an information processing method is recorded, wherein the information processing method includes: acquiring a first image including at least a part of a first lane, in which a first authentication target passes from a first area to a second area, and a second image including at least a part of a second lane, in which a second authentication target passes from the second area to the first area, and performing at least one of authentication of the first authentication target using the first image and authentication of the second authentication target using the second image.

### (Technical effect)

If the space connecting the first area and the second area (e.g., a passageway) does not have a first lane and a second lane, targets moving from the first area to the second area and targets moving from the second area to the first area will pass through the space in a disorderly manner. In this case, targets with their front facing the camera and targets with their back facing the camera will exist within the imaging range of the camera (e.g., at least one of cameras CAM1 and CAM2). In addition, since a plurality of targets pass through the space in a disorderly manner, there is possibility that one target will be obscured by another target from the perspective of the camera relatively frequently. As a result, the multiple images captured by the camera may include images that are not suitable for biometric authentication. In this case, targets that have not undergone biometric authentication by the information processing system 1 may enter the first area or the second area. In addition, the time required for biometric authentication of a single target may become relatively long.

In response to this, when the first lane and the second lane are set in the above space, it can be expected that the directions of travel of a plurality of targets passing through the first lane will be the same, and similarly, it can be expected that the directions of travel of a plurality of targets passing through the second lane will also be the same. For this reason, the camera CAM 1 can be positioned in advance so that it can capture images of the front of targets passing through the first lane. Similarly, the camera CAM 2 can be positioned in advance so that it can capture images of the front of targets passing through the second lane.

For this reason, for example, the authentication unit 12 can detect the face or eyes of the target (in other words, the authenticated target) relatively efficiently from each of the image captured by the camera CAM 1 (i.e., the first image) and the image captured by the camera CAM 2 (i.e., the second image). As a result, the time required for biometric authentication of a single target can be shortened. In addition, it is possible to prevent targets that have not undergone biometric authentication by the information processing system 1 from entering the first area or the second area.

### (Modified example)

At least one of the first lane and the second lane shown in FIG. 2 may include a gradient road that slopes from one side of the first area and the second area toward the other side of the first area and the second area. Here, a gradient road is not limited to a slope, but is a concept that includes structures that enable the movement of a target between two points with a height difference, such as stairs, escalators, and belt conveyors.

For example, the first lane may include a gradient road that slopes downward from the side of the first area toward the side of the second area. The camera CAM1 may image the gradient road as at least a part of the first lane. For example, by the camera CAM1 imaging the gradient road, an image (e.g., the first image) including a target passing through the gradient road may be generated. For example, by the camera CAM1 imaging the gradient road, an image (e.g., the first image) including a target before entering the gradient road may be generated. For example, by the camera CAM1 imaging the gradient road, an image (e.g., the first image) including a target after passing through the gradient road may be generated.

Similarly, the second lane may include a gradient road that slopes downward from the side of the second area toward the side of the first area. The camera CAM2 may image the gradient road as at least a part of the second lane. For example, by the camera CAM2 imaging the gradient road, an image (e.g., the second image) including a target passing through the gradient road may be generated. For example, by the camera CAM2 imaging the gradient road, an image (e.g., the second image) including a target before entering the gradient road may be generated. For example, by the camera CAM2 imaging the gradient road, an image (e.g., the second image) including a target after passing through the gradient road may be generated.

Due to the gradient road, it can be expected that the difference between the height position of one target and the height position of another target immediately preceding the one target will be relatively large. For this reason, it is possible to suppress the head of one target from being obscured by other targets in the image (e.g., at least one of the first image and the second image). In addition, since it is expected that multiple faces of multiple targets will be included in a single image, it is expected that the efficiency of biometric authentication will be improved.

In this case, the gradient road may include the escalator E1 shown in FIG. 4. The camera C1 may be arranged so as to be able to image the escalator E1. The escalator E1 can control the direction of travel of the target by its operation. Therefore, it is possible to suppress the occurrence of a target (in other words, a reverse traveler) traveling in the opposite direction of the lane (e.g., at least one of the first lane and the second lane).

Incidentally, when the escalator E1 is included in the first lane, the camera C1 corresponds to an example of the camera CAM1. When the escalator E1 is included in the second lane, the camera C1 corresponds to an example of the camera CAM2. Incidentally that the arrows in FIG. 4 indicate the direction of travel of the escalator E1.

For example, the first lane may include an gradient road ascending from the side of the first area toward the side of the second area. The camera CAM1 may image a predetermined range including the terminal portion of the gradient road as at least a part of the first lane. Similarly, the second lane may include an gradient road ascending from the side of the second area toward the side of the first area. The camera CAM2 may image a predetermined range including the end of the gradient road as at least a part of the second lane.

The target climbing the gradient road often faces forward to confirm the path near the end of the gradient road. For this reason, if a camera (e.g., at least one of cameras CAM1 and CAM2) is positioned so as to image a predetermined range including the end of the gradient road, it can be expected that the face of the target (in other words, the authenticated target) will be imaged appropriately by the camera.

In this case, the gradient road may include the escalator E2 shown in FIG. 5. The camera C2 may be positioned so as to be able to image a predetermined range including the end of the escalator E2. The escalator E2 can control the direction of travel of the target by its operation. For this reason, it is possible to suppress the occurrence of targets (in other words, a reverse traveler) traveling in the opposite direction of the lane (e.g., at least one of the first lane and the second lane).

Incidentally, when the escalator E2 is included in the first lane, the camera C2 corresponds to an example of the camera CAM1. When the escalator E2 is included in the second lane, the camera C2 corresponds to an example of the camera CAM2. Incidentally, the arrows in FIG. 5 indicate the direction of travel of the escalator E2.

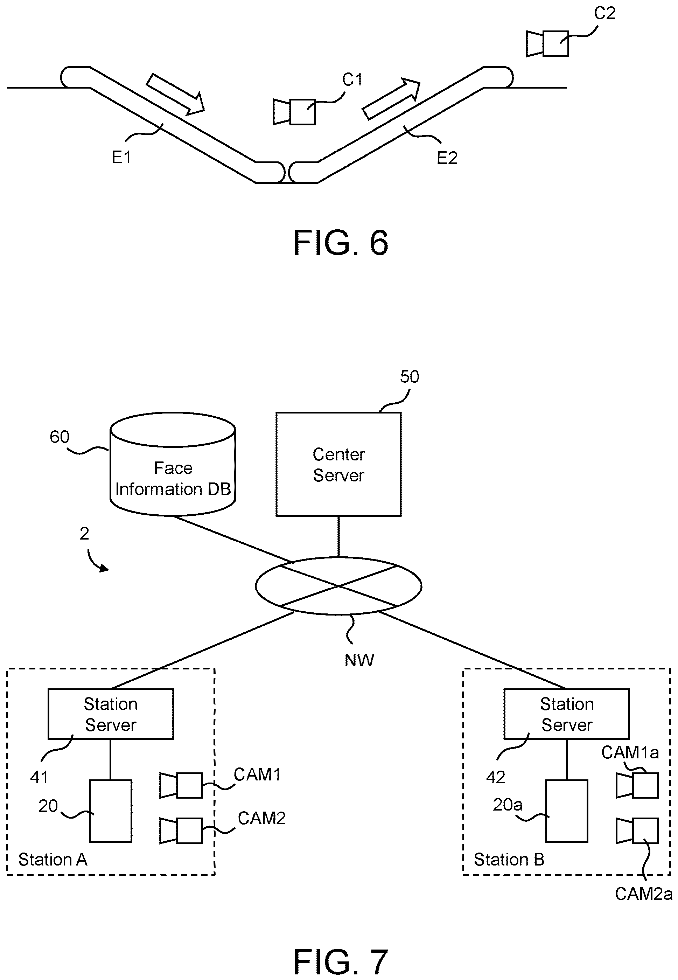

For example, the first lane may include a first gradient road descending from the first area side toward the second area side and a second gradient road ascending from the first area side toward the second area side. In this case, as shown in FIG. 6, the first lane may include the escalator E1 as the first gradient road and the escalator E2 as the second gradient road. In this case, the camera C1, as an example of the camera CAM1, may image the escalator E1. The camera C2, as another example of the camera CAM1, may image a predetermined range including the end portion of the escalator E2.

For example, the second lane may include a third gradient road that descends from the second area side toward the first area side and a fourth gradient road that ascends from the second area side toward the first area side. In this case, as shown in FIG. 6, the second lane may include the escalator E1 as the third gradient road and the escalator E2 as the fourth gradient road. In this case, the camera C1, as an example of the camera CAM2, may image the escalator E1. The camera C2, as another example of the camera CAM2, may image a predetermined range including the end portion of the escalator E2.

Incidentally, a display for digital signage, for example, may be provided in the vicinity of at least one of cameras C1 and C2. With this configuration, the faces of targets passing through the first lane or the second lane can be directed toward camera C1 or C2.

### <Second embodiment>

The second embodiment of the information processing system, the information processing method, and the recording medium will be described with reference to FIG. 7 to FIG. 10. The following describes the second embodiment of the information processing system, the information processing method, and the recording medium using a ticket gate system 2. Here, the ticket gate system 2 corresponds to an example of the information processing system. In the second embodiment, explanations that overlap with the above description of the first embodiment are omitted as appropriate.

### (Overview of the ticket gate system)

An overview of the ticket gate system 2 according to the second embodiment will be described with reference to FIG. 7. In FIG. 7, the ticket gate system 2 includes an information processing apparatus 20, a station server 41, and cameras CAM1 and CAM2 installed at a station A which is a railway station, an information processing apparatus 20a, a station server 42, cameras CAM1a and CAM2a, a center server 50, and a face information database 60 (hereinafter referred to as "face information DB 60"). Incidentally, cameras CAM1a and CAM2a at a station B which is a railway station, correspond to cameras CAM1 and CAM2 at the station A, respectively. The information processing apparatuses 20 and 20a correspond to the information processing apparatus 10 of the first embodiment described above.

Incidentally, other information processing devices may be installed at the station A in addition to the information processing apparatus 20. In other words, a plurality of information processing apparatuses may be installed at the station A. Similarly, other information processing apparatus may be installed at the station B in addition to the information processing apparatus 20a. In other words, a plurality of information processing apparatuses may be installed at the station B.

At the station A, the information processing apparatus 20 and the station server 41 may be connected via a local area network (LAN) or the like. Similarly, at the station B, the information processing apparatus 20a and the station server 42 may be connected via a local area network. The station servers 41 and 42, the center server 50, and the face information DB 60 are connected via a wide area network NW such as the Internet.

The ticket gate area of the station A has the first lane and the second lane as shown in FIG. 2. The first area shown in FIG. 2 may be either the interior or the exterior of the station A. The second area shown in FIG. 2 may be either the interior or the exterior of the station A. However, in the following description, the first area is assumed to be the exterior of the station A, and the second area is assumed to be the interior of the station A. In this case, targets entering the interior of the station A from the exterior of the station A premises pass through the first lane. Targets exiting from the interior of the station A to the exterior of the station B premises pass through the second lane.

The camera CAM1 images at least a part of the first lane. As a result, the camera CAM1 generates the first image including at least a part of the first lane. The camera CAM2 images at least a part of the second lane. As a result, the camera CAM2 generates the second image including at least a part of the second lane.

The information processing apparatus 20 may perform face recognition based on the image (i.e., the first image) captured by the camera CAM1 and identify the target entering the station A. The information processing apparatus 20 links identification information indicating the registered person corresponding to the target identified by face recognition with information indicating that the target has entered the station A, and transmits the linked information to the station server 41. The information processing apparatus 20 may perform face recognition based on the image captured by the camera CAM 2 (i.e., the second image) and identify the target leaving the station A. The information processing apparatus 20 links identification information indicating the registrant corresponding to the target identified by face recognition with information indicating that the target has exited the station A, and transmits the linked information to the station server 41.

The registrants are targets registered in the face information DB 60 as users of the ticket gate system 2. The face information DB 60 stores information related to each of the multiple registrants. In the face information DB 60, the information related to a single registrant may include, for example, identification information for identifying a single registrant and face information used for face recognition (e.g., face feature quantities indicating the face features of a single registrant). In addition to the identification information and face information, the information related to a single registrant may include terminal information (e.g., telephone number, e-mail address, etc.) related to a terminal device (e.g., smartphone) possessed by a single registrant.

The station server 41 transmits the information sent from the information processing apparatus 20 (i.e., identification information indicating the registered person corresponding to the target identified by face recognition, and information indicating that the target has entered the station A or information indicating that the target has exited the station A) to the center server 50 at a predetermined communication cycle.

The ticket gate area of the station B is divided into the first lane and the second lane as shown in FIG. 2. The first area shown in FIG. 2 may be either the interior or the exterior of the station B. The second area shown in FIG. 2 may be either inside or outside the station B. However, in the following explanation, the first area is assumed to be outside the station B, and the second area is assumed to be inside the station B. In this case, targets entering the station B from outside the station B pass through the first lane. Targets exiting the station B from inside the station B pass through the second lane.

The camera CAM1a captures at least a portion of the first lane. As a result, the camera CAM1a generates a third image including at least a portion of the first lane. The camera CAM2a captures at least a portion of the second lane. As a result, the camera CAM2a generates a fourth image including at least a portion of the second lane.

The information processing apparatus 20a may perform face recognition based on the image (i.e., the third image) captured by the camera CAM1a and identify the target entering the station B. The information processing apparatus 20a links identification information indicating the registered person corresponding to the target identified by face recognition with information indicating that the target has entered the station B and transmits the linked information to the station server 42. The information processing apparatus 20a may perform face recognition based on the image (i.e., the fourth image) captured by the camera CAM2a and identify the target leaving the station B. The information processing apparatus 20a links identification information indicating the registered person corresponding to the target identified by face recognition with information indicating that the target has left the station B and transmits the linked information to the station server 42.

The station server 42 transmits the information transmitted from the information processing apparatus 20a (i.e., identification information indicating the registered user corresponding to the target identified by face recognition, and information indicating that the target has entered the station B or information indicating that the target has exited the station B) to the center server 50 at a predetermined communication cycle.

The center server 50 may calculate the railway usage fees for each registered user based on the information transmitted from each of the multiple station servers, including station servers 41 and 42 (e.g., identification information indicating the registered user identified by face recognition, and information indicating entry into or exit from the station). The center server 50 may settle the railway usage fees for each registered user using the settlement information related to each registered user.

### (Configuration of information processing apparatus)

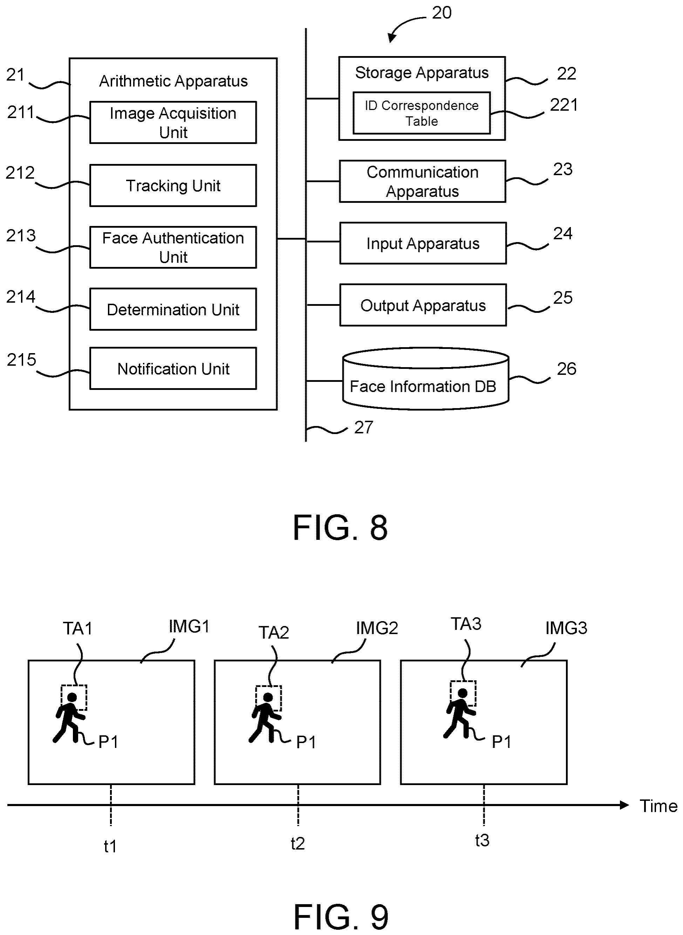

In FIG. 8, the information processing apparatus 20 is provided with an arithmetic apparatus 21, a storage apparatus 22, and a communication apparatus 23. The information processing apparatus 20 may further include an input apparatus 24 and an output apparatus 25. The information processing apparatus 20 may include a face information database 26 (hereinafter referred to as "face information DB 26" as appropriate). The information processing apparatus 20 may not necessarily be provided with at least one of the input apparatus 24 and the output apparatus 25. In the information processing apparatus 20, the arithmetic apparatus 21, the storage apparatus 22, the communication apparatus 23, the input apparatus 24, the output apparatus 25, and the face information DB 26 may be connected via a data bus 27.

Incidentally, the face information DB 26 may store the same information as that registered in the face information DB 60. The face information DB 26 may be updated at predetermined intervals to ensure that the information registered in the face information DB 26 is the same as that registered in the face information DB 60.

The arithmetic apparatus 21 may be, for example, a CPU (central processing unit), a GPU (graphics processing unit), an FPGA (Field Programmable Gate Array), a TPU (Tensor Processing Unit), and/or a quantum processor.

The storage apparatus 22 may be, for example, a RAM (Random Access Memory), a ROM (Read Only Memory), a hard disk apparatus, an optical magnetic disk apparatus, an SSD (Solid State Drive), and an optical disk array. In other words, the storage apparatus 22 may include a non-temporary recording medium. The storage apparatus 22 is capable of storing desired data. For example, the storage apparatus 22 may temporarily store a computer program executed by the arithmetic apparatus 21. The storage apparatus 22 may temporarily store data temporarily used by the arithmetic apparatus 21 when the arithmetic apparatus 21 is executing a computer program.

The communication apparatus 23 may be capable of communicating with an apparatus external to the information processing apparatus 20. The communication apparatus 23 may perform wired communication or wireless communication.

The input apparatus 24 is an apparatus capable of receiving information input from an external source to the information processing apparatus 20. The input apparatus 24 may include an operation apparatus (e.g., a keyboard, a mouse, a touch panel, etc.) that can be operated by an operator of the information processing apparatus 20. The input apparatus 24 may include a recording medium reading apparatus capable of reading information recorded on a recording medium that can be attached to and detached from the information processing apparatus 20, such as a USB (Universal Serial Bus) memory. When information is input to the information processing apparatus 20 via the communication apparatus 23 (in other words, when the information processing apparatus 20 acquires information via the communication apparatus 23), the communication apparatus 23 may function as an input apparatus.

The output apparatus 25 is an apparatus capable of outputting information to the outside of the information processing apparatus 20. The output apparatus 25 may output visual information such as characters and images as the above information, or may output auditory information such as voice, or may output tactile information such as vibration. The output apparatus 25 may include, for example, at least one of a display, a speaker, a printer, and a vibration motor. The output apparatus 25 may be capable of outputting information to a recording medium that is detachable from the information processing apparatus 20, such as a USB memory. When the information processing apparatus 20 outputs information via the communication apparatus 23, the communication apparatus 23 may function as an output apparatus.

The arithmetic apparatus 21 may have an image acquisition unit 211, a tracking unit 212, a face recognition unit 213, a determination unit 214, and a notification unit 215 as function blocks realized logically or as processing circuits realized physically.

At least one of the image acquisition unit 211, the tracking unit 212, the face recognition unit 213, the determination unit 214, and the notification unit 215 may be realized in a form that mixes logical function blocks and physical processing circuits (i.e., hardware). When at least one of the image acquisition unit 211, the tracking unit 212, the face recognition unit 213, the determination unit 214, and the notification unit 215 is a functional block, at least one of the image acquisition unit 211, the tracking unit 212, the face recognition unit 213, the determination unit 214, and the notification unit 215 may be realized by the arithmetic apparatus 21 executing a predetermined computer program.

The arithmetic apparatus 21 may acquire (in other words, read) the predetermined computer program from the storage apparatus 22. The arithmetic apparatus 21 may read the predetermined computer program stored in a computer-readable and non-temporary recording medium using a recording medium reading device not shown, which is provided in the information processing apparatus 20. The arithmetic apparatus 21 may acquire (in other words, download or read) the predetermined computer program from an apparatus not shown external to the information processing apparatus 20 via the communication apparatus 23. The recording medium for recording the predetermined computer program executed by the arithmetic apparatus 21 may be at least one of an optical disk, a magnetic medium, an optical magnetic disk, a semiconductor memory, and any other medium capable of storing a program.

The "image acquisition unit 211", the "face recognition unit 213", and the "face information DB 26" are components corresponding to the "image acquisition unit 11", the "authentication unit 12", and the "information DB 13" in the first embodiment described above.

The information processing apparatus 20a may have the same configuration as the information processing apparatus 20. Therefore, the explanation of the information processing apparatus 20a is omitted. The following describes the operation of the information processing apparatus 20, but the information processing apparatus 20a may perform the same operation as the information processing apparatus 20.

### (Operation of the information processing apparatus)

As described above, the information processing apparatus 20 performs face recognition of a target passing through the first lane set at the station A based on an image (i.e., the first image) captured by the camera CAM1. The information processing apparatus 20 performs face recognition of a target passing through the second lane set at the station A based on an image (i.e., the second image) captured by the camera CAM 2.

The information processing apparatus 20 may perform the above face recognition of the target, who is passing through the first lane, while the target passing through the first lane from outside of the station A (corresponding to the first area in FIG. 2) toward inside of the station A (corresponding to the second area in FIG. 2). The information processing apparatus 20 may perform face recognition of the target, who is passing through the second lane, while the target passing through the second lane from the inside of the station A toward the outside of the station A. In other words, the information processing apparatus 20 may be an apparatus capable of performing walk-through face recognition. Incidentally, when there is no apparatus capable of physically preventing users from passing through the ticket gate area of the station A, the face recognition method performed by the information processing apparatus 20 may be called gate-less face recognition.

The image acquisition unit 211 acquires an image (i.e., the first image) that includes at least a portion of the first lane set at the station A captured by the camera CAM1. The image acquisition unit 211 acquires an image (i.e., the second image) that includes at least a portion of the second lane set at the station A captured by the camera CAM2.

Incidentally, the cameras CAM 1 and CAM 2 may be connected to the information processing apparatus 20 via a cable such as a USB cable. The cameras CAM 1 and CAM 2 may communicate with the information processing apparatus 20 by wireless communication such as Bluetooth (registered trademark). In these cases, the image acquisition unit 211 may directly acquire images from the cameras CAM1 and CAM2. The cameras CAM1 and CAM2 may transmit the captured images to the station server 41. In this case, the image acquisition unit 211 may acquire the images captured by the cameras CAM1 and CAM2 from the station server 41.

The tracking unit 212 performs tracking processing of one or more targets passing through at least one of the first lane and the second lane using images acquired by the image acquisition unit 211 (e.g., at least one of the first image and the second image). In addition, the face recognition unit 213 performs face recognition processing of one or more persons passing through at least one of the first lane and the second lane using the image acquired by the image acquisition unit 211.

As a specific example of the tracking process performed by the tracking unit 212, a case, where the tracking unit 212 performs tracking of the target P1 passing through the first lane (see FIG. 2), will be described with reference to FIG. 9. In addition, as a specific example of the face recognition process performed by the face recognition unit 213, a case, where the face recognition unit 213 performs face recognition of the target P1, will be described with reference to FIG. 9.

In FIG. 9, images IMG1, IMG2, and IMG3 are images that include the target P1 (in other words, images in which the target P1 is captured). The image IMG1 is an image generated by the camera CAM1 imaging the first lane at time t1. The image IMG2 is an image generated by the camera CAM1 capturing the first lane at time t2, which is later than the time t1. The image IMG3 is an image generated by the camera CAM1 capturing the first lane at time t3, which is later than the time t2.

The images IMG1, IMG2, and IMG3 may each correspond to a single frame of a video. In this case, the image IMG2 does not necessarily correspond to the frame immediately following the frame corresponding to the image IMG1. In other words, the image IMG2 may correspond to a frame that is two or more frames later than the frame corresponding to the image IMG1. Similarly, the image IMG3 may not necessarily correspond to the frame immediately following the frame corresponding to the image IMG2. In other words, the image IMG3 may correspond to an image that is two or more frames later than the frame corresponding to the image IMG2.

The tracking unit 212 detects the head of the target P1 included in the image IMG1 from the image IMG1. Since the method for detecting a human head from an image is based on existing technology, a detailed description thereof is omitted. The tracking unit 212 sets the area including the head of the detected target P1 as the tracking area TA1.

When the tracking area TA1 is set, the tracking unit 212 sets a tracking ID, which is identification information for identifying the target P1 related to the tracking area TA1, to the target P1. The tracking unit 212 calculates the position of the target P1 (e.g., the position of the feet of the target P1) based on the tracking area TA1. Since existing techniques can be applied to calculate the position of a subject included in an image from the image, a detailed description thereof is omitted. The tracking unit 212 links the tracking ID and the position of the target P1 to each other and registers them in an ID correspondence table 221 stored in the storage apparatus 22.

When the tracking area TA1 is set, the tracking unit 212 determines whether or not the face of the target P1 is captured in the tracking area TA1. In other words, the tracking unit 212 performs face detection for the tracking area TA1. If it is determined that the face of the target P1 is captured in tracking area TA1, the tracking unit 212 generates a face image including the face area of the target P1. The tracking unit 212 links the generated face image with the tracking ID related to the target P1 and sends it to the face recognition unit 213. If it is determined that the face of the target P1 is not captured in the tracking area TA1, the tracking unit 212 does not need to generate a face image.

The face recognition unit 213 performs face recognition processing using the face image sent from the tracking unit 212. For example, the face recognition unit 213 may calculate face feature quantities indicating features of the face of the target P1 from the above face image. The face recognition unit 213 may calculate a matching score from the calculated face feature quantities and face information (e.g., face feature quantities) of a registered person registered in the face information DB 26.

If the calculated matching score is greater than a predetermined threshold, the face recognition unit 213 determines that face recognition was successful. In this case, a single registered person corresponding to the target (here, the target P1), who is indicated by the face image transmitted from the tracking unit 212, is identified from among the plurality of registered persons registered in the face information DB 26. On the other hand, if the calculated matching score is smaller than a predetermined threshold value, the face recognition unit 213 determines that face recognition has failed. In this case, it is highly probable that the person corresponding to the target (here, target P1) indicated by the face image transmitted from the tracking unit 212 is not registered in the face information DB 26. Incidentally, if the calculated match score is "equal" to the predetermined threshold, it can be treated as either case.

When face recognition is successful, the face recognition unit 213 links the authentication ID indicating the registered person registered in the face information DB 26 corresponding to the target (here, the target P1) indicated by the face image transmitted from the tracking unit 212 to the tracking ID linked to the above face image, and registers it in the ID correspondence table 221. In addition to the authentication ID, the face recognition unit 213 may register the authentication time, which is the time when the face recognition process was performed, in the ID correspondence table 221. If face recognition fails, the face recognition unit 213 may register information indicating that there is no matching person (e.g., "N/A (Not Applicable)") linked to the tracking ID linked to the face image sent from the tracking unit 212 in the ID correspondence table 221. The "authentication ID" corresponds to an example of the "identification information for identifying a single registrant" described above.

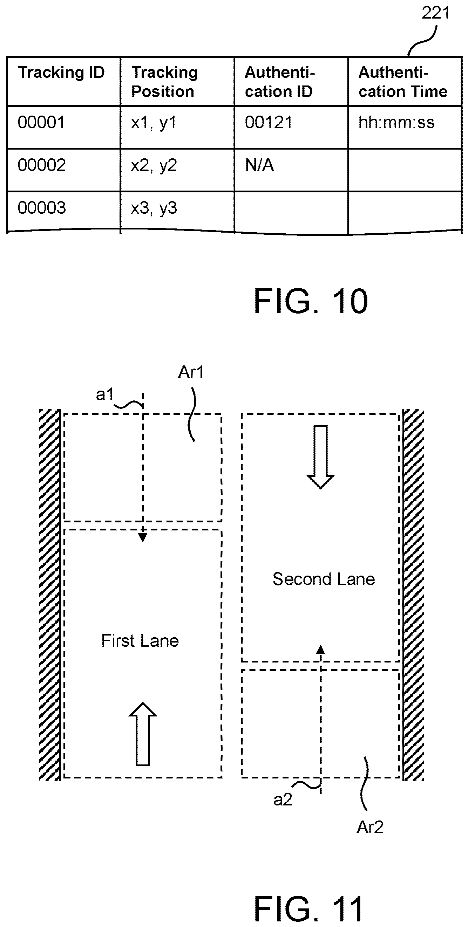

The ID correspondence table 221 will be described with reference to FIG. 10. As shown in FIG. 10, in the ID correspondence table 221, the tracking ID, the tracking position (e.g., the position of the feet of target P1), the authentication ID, and the authentication time may be linked to each other. In the ID correspondence table 221, when the tracking ID is linked to a specific authentication ID, it indicates that the registrant corresponding to the person for whom the tracking ID was set is registered in the face information DB 26. When the tracking ID is linked to the character string "N/A," this indicates that the person corresponding to the person for whom the tracking ID was set is not registered in the face information DB 26. When the tracking ID is not linked to an authentication ID (i.e., when the authentication ID field is blank), this indicates that no face recognition processing has been performed.

The tracking unit 212 can identify the target P1 included in the image IMG2 using the image IMG2 and the image IMG1. Identifying the target P1 included in the image IMG2 is synonymous with matching the target P1 included in the image IMG1 with the target P1 included in the image IMG2. For this reason, at least one of a matching method and an optical flow method related to matching between images can be applied to identify the target P1 included in the image IMG2. Since various existing methods can be applied to each of the matching method and the optical flow method, details thereof are omitted.

When the target P1 included in the image IMG2 is identified, the tracking unit 212 detects the head of the target P1. The tracking unit 212 sets the area including the head of the target P1 as the tracking area TA2 based on the detected head of the target P1. Since the target P1 included in the image IMG1 and the target P1 included in the image IMG2 are the same target, the tracking ID of the target P1 related to the tracking area TA2 is the same as the tracking ID of the target P1 related to the tracking area TA1. The tracking unit 212 calculates the position of the target P1 based on the tracking area TA2.

The tracking unit 212 registers the position of the target P1 in the ID correspondence table 221 by linking it to the tracking ID related to the target P1. In this case, since the position of the target P1 calculated based on the tracking area TA1 is registered in the ID correspondence table 221, the position of the target P1 is updated by the tracking unit 212 registering the position of the target P1 calculated based on the tracking area TA2 in the ID correspondence table 221.

When the tracking area TA2 is set, the tracking unit 212 determines whether or not the face of the target P1 is captured in the tracking area TA2. In other words, the tracking unit 212 performs face detection for the tracking area TA2. If it is determined that the face of the target P1 is captured in the tracking area TA2, the tracking unit 212 generates a face image including the face area of the target P1. The tracking unit 212 links the generated face image with the tracking ID related to the target P1 and sends it to the face recognition unit 213. If it is determined that the face of target P1 is not captured in the tracking area TA2, the tracking unit 212 does not need to generate a face image. Even if it is determined that the face of the target P1 is captured in tracking area TA2, if the tracking ID related to the target P1 is linked to the authentication ID in the ID correspondence table 221 (i.e., if face recognition has already been successful), the tracking unit 212 does not need to generate a face image.

The face recognition unit 213 performs face recognition processing using the face image sent from the tracking unit 212. When face recognition is successful, the face recognition unit 213 registers the authentication ID indicating the registrant registered in the face information DB 26 corresponding to the target (here, the target P1) indicated by the face image transmitted from the tracking unit 212 to the tracking ID linked to the above face image in the ID correspondence table 221. In addition to the authentication ID, the face recognition unit 213 may register the authentication time, which is the time when the face recognition process was performed, in the ID correspondence table 221. If the authentication time is already registered in the ID correspondence table 221 (i.e., if face recognition has been successful in the past), the face recognition unit 213 may update the authentication time registered in the ID correspondence table 221. When face recognition fails, the face recognition unit 213 may register information indicating that there is no matching person (e.g., "N/A") linked to the tracking ID linked to the face image sent from the tracking unit 212 in the ID correspondence table 221.

The tracking unit 212 may identify the target P1 included in the image IMG3 using the image IMG3 and the image IMG2. When the target P1 included in the image IMG3 is identified, the tracking unit 212 detects the head of the target P1. The tracking unit 212 sets the area including the head of the target P1 detected as the tracking area TA3. Since the target P1 included in the image IMG2 and the target P1 included in the image IMG3 are the same target, the tracking ID of the target P1 related to the tracking area TA3 is the same as the tracking ID of the target P1 related to the tracking area TA2. The tracking unit 212 calculates the position of target P1 based on tracking area TA3.

The tracking unit 212 registers the position of the target P1 in the ID correspondence table 221 by linking it to the tracking ID associated with the target P1. In this case, since the position of the target P1 calculated based on the tracking area TA2 is registered in the ID correspondence table 221, the position of the target P1 is updated by the tracking unit 212 registering the position of the target P1 calculated based on the tracking area TA3 in the ID correspondence table 221.

When the tracking area TA3 is set, the tracking unit 212 determines whether or not the face of the target P1 is captured in the tracking area TA3. In other words, the tracking unit 212 performs face detection for the tracking area TA3. If it is determined that the face of the target P1 is captured in the tracking area TA3, the tracking unit 212 generates a face image including the face area of the target P1. The tracking unit 212 links the generated face image to the tracking ID related to the target P1 and sends it to the face recognition unit 213. If it is determined that the face of the target P1 is not captured in the tracking area TA3, the tracking unit 212 does not need to generate a face image. Even if it is determined that the face of the target P1 is captured in the tracking area TA3, if the tracking ID related to the target P1 is linked to the authentication ID in the ID correspondence table 221 (i.e., if face recognition has already been successful), the tracking unit 212 does not need to generate a face image.

The face recognition unit 213 performs face recognition processing using the face image sent from the tracking unit 212. When face recognition is successful, the face recognition unit 213 links the authentication ID indicating the registrant registered in the face information DB 26 corresponding to the target (here, the target P1) indicated by the face image transmitted from the tracking unit 212 to the tracking ID linked to the above face image, and registers it in the ID correspondence table 221. In addition to the authentication ID, the face recognition unit 213 may register the authentication time, which is the time when the face recognition process was performed, in the ID correspondence table 221. If the authentication time is already registered in the ID correspondence table 221 (i.e., if face recognition has been successful in the past), the face recognition unit 213 may update the authentication time registered in the ID correspondence table 221. When face recognition fails, the face recognition unit 213 may register information indicating that there is no matching person (e.g., "N/A") in the ID correspondence table 221 by linking it to the tracking ID linked to the face image sent from the tracking unit 212.

By the way, it may be difficult for the tracking unit 212 to continue tracking the target P1 due to the head of the target P1 being hidden by another person, for example. When tracking of the target P1 is interrupted, the tracking unit 212 may perform the following processing. After the tracking of the target P1 is interrupted, the tracking unit 212 may determine whether or not a new person has been detected from the image acquired by the image acquisition unit 211 (e.g., the image captured by the camera CAM1). A "new person" means a person for whom no tracking ID has been set.

If a new person is detected, the tracking unit 212 may determine whether or not the target P1 and the new target are the same target by comparing the feature quantities of the tracking area related to the target P1 (e.g., at least one of the tracking areas TA1, TA2, and TA3) with the feature quantities of the tracking area related to the new person. If the target P1 and the new person are determined to be the same target, the tracking unit 212 may set the tracking ID related to the target P1 for the new person. As a result, the tracking unit 212 can track the target P1 again. The feature quantity may be a feature quantity related to the head of the target, a feature quantity related to the upper body of the target, or a feature quantity related to the entire body of the target. In other words, the tracking area (e.g., at least one of tracking areas TA1, TA2, and TA3) may include the head of the target, the upper body of the target, or the entire body of the target. The feature quantity may be obtained, for example, by using person re-identification technology.

The tracking unit 212 and the face recognition unit 213 may repeat the above-described processing until the target P1 passes through the first lane. The tracking unit 212 and the face recognition unit 213 may perform the same processing as described above for all targets passing through the first lane. The tracking unit 212 and the face recognition unit 213 may perform the same processing as described above for all targets passing through the second lane.

The determination unit 214 determines which of the plurality of targets passing through the first lane or the second lane has passed the face recognition (in other words, which target has been identified) based on the ID correspondence table 221. When a tracking ID is linked to a specific authentication ID in the ID correspondence table 221, the determination unit 214 may determine the target associated with the tracking ID as a target for which face recognition was successful.

Incidentally, the determination unit 214 may determine that a target passing through the first lane has entered the station A when the tracking position linked to the tracking ID in the ID correspondence table 221 is on the inside of the station A (e.g., the second area in FIG. 2) from the first predetermined position in the first lane. The determination unit 214 may determine that the target passing through the second lane has exited the station A when the tracking position linked to the tracking ID in the ID correspondence table 221 is on the outside of the station A (e.g., the first area in FIG. 2) from the second predetermined position in the second lane.

The notification unit 215 may link the authentication ID related to the target for which face recognition was successful (in other words, the authentication ID related to the registrant corresponding to the target) with information indicating that the target has entered the station A or has exited the station A, and transmit the linked information to the center server 50.

### (Technical effect)

In the ticket gate system 2 according to the second embodiment, in the ticket gate area of a railway station (e.g., at least one of stations A and B), a lane (e.g., the first lane in FIG. 2) through which targets entering the railway station pass and a lane (e.g., the second lane in FIG. 2) through which targets exiting the railway station pass are set. For this reason, it can be expected that the directions of travel of multiple targets passing through the first lane will be the same, and similarly, it can be expected that the directions of travel of multiple targets passing through the second lane will also be the same. Therefore, the camera CAM1 can be positioned in advance so that it can capture images of the front of targets passing through lane 1. Similarly, the camera CAM2 can be positioned in advance so that it can capture images of the front of targets passing through lane 2.

As a result, for example, the tracking unit 212 can detect the faces of the targets (in other words, the subjects to be authenticated) relatively efficiently from the image captured by the camera CAM1 (i.e., the first image) and the image captured by the camera CAM2 (i.e., the second image).

### (First modified example)

For example, in addition to cameras CAM 1 and CAM 2, an overhead camera may be installed in the ticket gate area of the station A to take flat images of the ticket gate area from above. The image acquisition unit 211 of the information processing apparatus 20 may acquire images taken by the overhead camera. For example, the determination unit 214 may detect the number of targets passing through the first lane and the number of targets passing through the second lane based on the images taken by the overhead camera.

The determination unit 214 may determine whether or not the number of targets passing through the first lane is equal to the number of tracking IDs linked to positions in the first lane in the ID correspondence table 221 (in other words, the number of targets for which face recognition is performed using images captured by the camera CAM1). If it is determined that the number of targets passing through the first lane is different from the number of tracking IDs linked to positions in the first lane in the ID correspondence table 221, the notification unit 215 may issue a warning to a station staff, for example, via a terminal device used by the station staff at the station A.

The determination unit 214 may determine whether or not the number of targets passing through the second lane is equal to the number of tracking IDs linked to the positions in the second lane in the ID correspondence table 221 (in other words, the number of targets for which face recognition is performed using images captured by the camera CAM 2). If it is determined that the number of targets passing through the second lane is different from the number of tracking IDs linked to positions in the second lane in the ID correspondence table 221, the notification unit 215 may issue a warning to a station staff, for example, via a terminal device used by the station staff at the station A.

With this configuration, it is possible, for example, to detect targets that enter or exit the station A while hiding behind other people.

### (Second modified example)

For example, in addition to cameras CAM1 and CAM2, an overhead camera may be installed in the ticket gate area of the station A to take flat images of the ticket gate area from above. The resolution of the overhead camera may be lower than that of cameras CAM1 and CAM2. The image acquisition unit 211 of the information processing apparatus 20 may acquire the images taken by the overhead camera. For example, the determination unit 214 may determine whether or not there is a target moving in the opposite direction to the direction of travel of the first lane (in other words, a reverse traveler) by performing predetermined image processing on a plurality of images taken by the overhead camera in a time-continuous manner. When it is determined that there is a target traveling in the opposite direction of the first lane, the notification unit 215 may issue a warning to a station staff, for example, via a terminal device used by the station staff at the station A.

For example, the determination unit 214 may determine whether or not there is a target traveling in the opposite direction of the second lane (in other words, a reverse traveler) by performing predetermined image processing on a plurality of temporally continuous images captured by the overhead camera. When it is determined that there is a target traveling in the opposite direction of the second lane, the notification unit 215 may issue a warning to a station staff, for example, via a terminal device used by the station staff at the station A.

### (Third modified example)

For example, as shown in FIG. 11, in addition to the first lane and the second lane, areas Ar1 and Ar2 may be set in the ticket gate area of the station A. The upper side of FIG. 11 is the inside of the station A, and the lower side of FIG. 11 is the outside of the station A.

A first camera for reverse travelers may be installed in the ticket gate area of the station A to image targets passing through the area Ar1 from the inside of the station A toward the outside of the station A (see broken arrow a1). A second camera for reverse travelers may be installed in the ticket gate area of the station A to capture images of targets passing through the area Ar2 from the outside of the station A toward the inside of the station A (see broken arrow a2).

The tracking unit 212 and the face recognition unit 213 of the information processing apparatus 20 may perform the above-described tracking processing and face recognition processing using the images captured by the first camera for reverse travelers. The determination unit 214 may determine that a target passing through the area Ar1 has exited from the station A when the tracking position linked to the tracking ID in the ID correspondence table 221 is on the first lane side of the end of area Arl, for example.

The tracking unit 212 and the face recognition unit 213 of the information processing apparatus 20 may perform the above-mentioned tracking process and face recognition process using images captured by the second camera for reverse travelers. The determination unit 214 may determine that the target passing through the area Ar2 has entered the station A when the tracking position linked to the tracking ID in the ID correspondence table 221 is, for example, on the second lane side of the end of the area Ar2.

### (Fourth modified example)

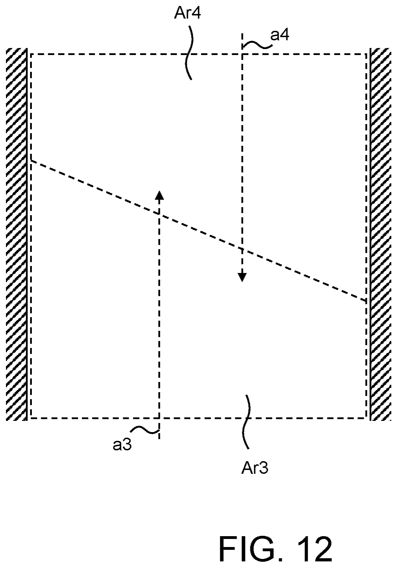

For example, as shown in FIG. 12, instead of the first lane and the second lane, areas Ar3 and Ar4 may be set in the ticket gate area of the station A. The upper part of FIG. 12 is the inside of the station A, and the lower part of FIG. 12 is the outside of the station A. A first camera (e.g., the camera CAM1) may be installed in the ticket gate area of the station A to image targets passing through the area Ar3 from the outside of the station A toward the inside of the station A (see broken arrow a3). A second camera (e.g., the camera CAM2) may be installed in the ticket gate area of the station A to image targets passing through the area Ar4 from the inside of the station A toward the outside of the station A (see broken arrow a4).

The tracking unit 212 and the face recognition unit 213 of the information processing apparatus 20 may perform the above-described tracking process and face recognition process using the images captured by the first camera. The determination unit 214 may determine that the target passing through the area Ar3 has entered the station A when the tracking position linked to the tracking ID in the ID correspondence table 221 is a position on the area Ar4 side of the area Ar4 side end of the area Ar3, for example.

The tracking unit 212 and face recognition unit 213 of the information processing apparatus 20 may perform the above-described tracking process and face recognition process using images captured by the second camera. The determination unit 214 may determine that the target passing through the area Ar4 has exited from the station A when the tracking position linked to the tracking ID in the ID correspondence table 221 is a position on the area Ar3 side of the aera Ar3 side end of the area Ar4, for example.

### (Fifth modified example)

The face information database (e.g., face information DBs 60 and 26) may register face information (e.g., face feature quantities) related to targets requiring attention. The determination unit 214 may determine whether or not the authentication ID registered in the ID correspondence table 221 is an authentication ID related to the target to be watched. If the authentication ID registered in the ID correspondence table 221 is determined to be an authentication ID related to the target to be watched, the notification unit 215 may issue a warning to a station staff, for example, via a terminal apparatus used by the station staff at the station A.

### (Sixth modified example)

In the ticket gate system 2, when prepaid electronic money can be used to pay railway usage fees, the balance of the above electronic money may be linked to identification information (e.g., authentication ID) for each of the plurality of registrants in a face information database (e.g., face information DBs 60 and 26).

For example, the determination unit 214 of the information processing apparatus 20 may determine whether or not the balance of electronic money linked to the identification information related to the registered user corresponding to the target leaving from the station A is less than the railway usage fee (e.g., fare) to be paid. If it is determined that the balance of the electronic money is less than the railway usage fee to be paid, the notification unit 215 may notify the terminal device (e.g., a smartphone) held by the above target that the balance is insufficient. In this case, the notification unit 215 may issue a warning to a station staff via a terminal device used by the station staff at the station A, for example.

### (Seventh modified example)

For example, in the ticket gate area of the station A, a first foot camera may be installed near the end of the first lane on the inside of the station A (e.g., the second area in FIG. 2) to capture images of the feet of targets passing through the first lane. A second foot camera may be installed near the end of the second lane on the outside of the station A (e.g., the first area in FIG. 2) to capture images of the feet of targets passing through the second lane.

The determination unit 214 may detect shoes of targets passing through the first lane from images captured by the first foot camera. The determination unit 214 may determine whether or not the direction toward which the toes of the detected shoes are pointing is the same as the direction of travel set for the first lane. If the direction toward which the toes of the detected shoes are pointing is opposite to the direction of travel set for the first lane, the determination unit 214 may determine that the target is a reverse traveler.

The determination unit 214 may detect the target shoes passing through the second lane from the images taken by the second foot camera. The determination unit 214 may determine whether or not the direction in which the toes of the detected shoes are pointing is the same as the direction of travel set for the second lane. If the direction toward which the toe of the detected shoe is pointing is opposite to the direction of travel set for the second lane, the determination unit 214 may determine that the above target is a reverse traveler.

### (Eighth modified example)

For example, the ID correspondence table 221 may include a history of tracking positions for each target. The determination unit 214 may determine the direction of travel of each target based on the history of tracking positions. In this case, if the first step of one target is from the side of the inside of the station A of the first lane (e.g., the second area in FIG. 2), the determination unit 214 may determine that the direction of travel of the one target is opposite to the direction of travel set for the first lane. The determination unit 214 may determine that the direction of travel of the one target is opposite to the direction of travel set for the second lane when the first step of the one target is from the side outside of the station A of the second lane (e.g., the first area in FIG. 2). Alternatively, the determination unit 214 may determine the direction of travel of the one target from the first and second steps of the one target.

When it is determined that the travel direction of the target passing through the first lane is opposite to the travel direction set for the first lane, the determination unit 214 may determine that the target is a reverse traveler. When it is determined that the travel direction of the target passing through the second lane is opposite to the travel direction set for the second lane, the determination unit 214 may determine that the target is a reverse traveler.

### (Ninth modified example)

In the manner of detecting or determining a reverse traveler in the ticket gate area of a railway station (as described in the second modified example, seventh modified example, and eighth modified example above), for example, the determination unit 214 may determine the trajectory of the reverse traveler based on the position of the reverse traveler calculated by the tracking unit 212. The determination unit 214 may determine the reason for the reverse traveler's reverse travel based on the determined trajectory of the reverse traveler.

For example, if the trajectory of the reverse traveler shows relatively large fluctuations in the width direction of the lane (e.g., at least one of the first lane and the second lane), the determination unit 214 may determine that the reverse traveler is traveling in reverse due to poor physical condition. In this case, the notification unit 215 may notify a station staff that there is a person in poor physical condition, for example, via a terminal apparatus used by the station staff at the station A.

For example, when the trajectory of the reverse traveler shows relatively small fluctuations in the width direction of the lane (e.g., at least one of the first lane and the second lane), the determination unit 214 may determine that the reverse traveler is intentionally travelling in the opposite direction. In this case, the determination unit 214 may determine that the reverse traveler has entered the station A or exited the station A. As a result, railway usage fees may be charged to the reverse traveler.

### (Tenth modified example)

For example, as shown in FIG. 2, when the first lane and the second lane are adjacent to each other and there is no member such as a fence that physically obstructs the passage of the target between the first lane and the second lane, the target passing through the first lane may move to the second lane in order to overtake another target in front.

For example, the determination unit 214 may determine that the target (in other words, the authenticated target) associated with the tracking ID has moved from the first lane to the second lane when the tracking position linked to the tracking ID in the ID correspondence table 221 changes from a position in the first lane to a position in the second lane.

In this case, the notification unit 215 may notify, for example, the terminal device (e.g., a smartphone) possessed by the above target with a message such as "Please return to the first lane." Alternatively, the notification unit 215 may notify a station staff, for example, via a terminal device used by the station staff, of information for identifying the above target (e.g., an image including the above target) and information indicating that the above target has moved from the first lane to the second lane. With this configuration, it can be expected that a target that has moved from the first lane to the second lane will return to the first lane.

Incidentally, if the above target does not return to the first lane despite the above notification, the information processing apparatus 20 may change the above target from a target to be authenticated passing through the first lane to a target to be authenticated passing through the second lane.

### <Supplementary Notes>

With respect to the example embodiment described above, the following Supplementary Notes are further disclosed.

### (Supplementary Note 1)

An information processing system comprising:
an image acquisition means for acquiring at least one of a first image including at least a part of a first lane, in which a first authentication target passes from a first area to a second area, and a second image including at least a part of a second lane, in which a second authentication target passes from the second area to the first area; and
an authentication means for performing at least one of authentication of the first authentication target using the first image and authentication of the second authentication target using the second image.

### (Supplementary Note 2)

The information processing system according to the supplementary note 1, wherein
at least one of the first lane and the second lane includes a gradient road, and
the image acquisition means acquires at least one of the first image including the first authentication target passing the gradient road, or the first authentication target before entering the gradient road or after passing through the gradient road, and the second image including the second authentication target passing the gradient road, or the second authentication target before entering the gradient road or after passing through the gradient road.

### (Supplementary Note 3)

The information processing system according to the supplementary note 2, wherein
the gradient road includes an escalator.

### (Supplementary Note 4)

The information processing system according to the supplementary note 2 or 3, comprising: an imaging means for imaging the gradient road as at least the part of the first lane or at least the part of the second lane.

### (Supplementary Note 5)

The information processing system according to any one of supplementary notes 1 to 4, comprising: an notification means for issuing a warning at least one of in a case where number of persons passing through the first lane differs from number of authenticated targets of authentication performed by the authentication means using the first image, and in a case where number of persons passing through the second lane differs from number of authenticated target of authentication performed by the authentication means using the second image.

### (Supplementary Note 6)

The information processing system according to any one of supplementary notes 1 to 5, comprising: a reverse traveler detection means for detecting a reverse traveler based on at least one of the first image and the second image.

### (Supplementary Note 7)

The information processing system according to any one of supplementary notes 1 to 7, wherein
the first area is one of interior or exterior of a railway station, and
the second area is the other of the interior and the exterior of the railway station.

### (Supplementary Note 8)

An information processing method including:
acquiring at least one of a first image including at least a part of a first lane, in which a first authentication target passes from a first area to a second area, and a second image including at least a part of a second lane, in which a second authentication target passes from the second area to the first area; and
performing at least one of authentication of the first authentication target using the first image and authentication of the second authentication target using the second image.

### (Supplementary Note 9)

An recording medium on which a computer program that allows a computer to execute an information processing method is recorded, the information processing method including:
acquiring at least one of a first image including at least a part of a first lane, in which a first authentication target passes from a first area to a second area, and a second image including at least a part of a second lane, in which a second authentication target passes from the second area to the first area; and
performing at least one of authentication of the first authentication target using the first image and authentication of the second authentication target using the second image.

This disclosure is not limited to the example embodiments described above, but is allowed to be changed, if desired, without departing from the essence or spirit of this disclosure which can be read from the claims and the entire specification. An information processing system, an information processing method, and a recording medium with such changes are also intended to be within the technical scope of the present disclosure.

### Description of Reference Codes

1 Information processing system
2 Ticke gate system
10, 20, 20a Information processing apparatus
11, 211 Image acquisition unit
12 Authentication unit
13 Information DB
26, 60 Face information DB
212 Tracking unit
213 Face recognition unit
214 Determination unit
215 Notification unit

## Claims

1. An information processing system comprising:
an image acquisition means for acquiring at least one of a first image including at least a part of a first lane, in which a first authentication target passes from a first area to a second area, and a second image including at least a part of a second lane, in which a second authentication target passes from the second area to the first area; and
an authentication means for performing at least one of authentication of the first authentication target using the first image and authentication of the second authentication target using the second image.

2. The information processing system according to claim 1, wherein
at least one of the first lane and the second lane includes a gradient road, and
the image acquisition means acquires at least one of the first image including the first authentication target passing the gradient road, or the first authentication target before entering the gradient road or after passing through the gradient road, and the second image including the second authentication target passing the gradient road, or the second authentication target before entering the gradient road or after passing through the gradient road.

3. The information processing system according to claim 2, wherein
the gradient road includes an escalator.

4. The information processing system according to claim 2 or 3, comprising: an imaging means for imaging the gradient road as at least the part of the first lane or at least the part of the second lane.

5. The information processing system according to any one of claims 1 to 4, comprising: an notification means for issuing a warning at least one of in a case where number of persons passing through the first lane differs from number of authenticated targets of authentication performed by the authentication means using the first image, and in a case where number of persons passing through the second lane differs from number of authenticated target of authentication performed by the authentication means using the second image.

6. The information processing system according to any one of claims 1 to 5, comprising: a reverse traveler detection means for detecting a reverse traveler based on at least one of the first image and the second image.

7. The information processing system according to any one of claims 1 to 6, wherein
the first area is one of interior or exterior of a railway station, and
the second area is the other of the interior and the exterior of the railway station.

8. An information processing method including:
acquiring at least one of a first image including at least a part of a first lane, in which a first authentication target passes from a first area to a second area, and a second image including at least a part of a second lane, in which a second authentication target passes from the second area to the first area; and
performing at least one of authentication of the first authentication target using the first image and authentication of the second authentication target using the second image.

9. An recording medium on which a computer program that allows a computer to execute an information processing method is recorded, the information processing method including:
acquiring at least one of a first image including at least a part of a first lane, in which a first authentication target passes from a first area to a second area, and a second image including at least a part of a second lane, in which a second authentication target passes from the second area to the first area; and
performing at least one of authentication of the first authentication target using the first image and authentication of the second authentication target using the second image.
